# EUROPÄISCHE PATENTANMELDUNG

(11) **EP 4 837 707 A1**
(43) Veröffentlichungstag der Anmeldung: **11.11.2026**
(21) Anmeldenummer: 26176571.3
(22) Anmeldetag: 05.05.2026
(51) Int. Cl.: B25J 9/16, B25J 19/06

(54) **ADAPTIVES VERBINDUNGSMODUL FÜR ROBOTERARME, ENDEFFEKTORSYSTEM FÜR ROBOTER, ROBOTERSYSTEM UND SYSTEM MIT EINEM SOLCHEN ROBOTERSYSTEM**

(30) Priorität: 09.05.2025 DE 102025117996
(71) Anmelder: Langenstein & Schemann GmbH, 96450 Coburg (DE)
(72) Erfinder: Barnickel, Harald, 96450 Coburg (DE)
(74) Vertreter: Meissner Bolte Nürnberg

(57) **Zusammenfassung**

Die zu Grunde liegende Erfindung betrifft insbesondere ein adaptives Verbindungsmodul für Roboterarme, ein Endeffektorsystem für Roboter und ein Robotersystem. Das adaptives Verbindungsmodul (10) ist eingerichtet zur Montage zwischen einem Roboterarm (7) und einem Endeffektor (11) und umfasst eine Kollisionsschutzeinheit (12), eine damit in Reihe geschaltete ein Nachgiebigkeitseinheit (13), eine der Kollisionsschutzeinheit (12) zugeordnete erste Montageschnittstelle (14) und eine der Nachgiebigkeitseinheit (13) zugeordnete zweite Montageschnittstelle (15). Die Montageschnittstellen (14, 15) sind so ausgebildet, dass das adaptive Verbindungsmodul (10) über eine der Montageschnittstellen (14) mit einem distalen Ende (8) des Roboterarms (7) und über die andere Montageschnittstelle (15) mit dem Endeffektor (11) zu verbinden ist. Die Kollisionsschutzeinheit (12) und die Nachgiebigkeitseinheit (13) sind zwischen dem distalen Ende (8) des Roboterarms (7) und dem Endeffektor (11) in Reihe geschaltet. Die Kollisionsschutzeinheit (12) weist eine Sensoreinheit (18) auf, welche dazu eingerichtet ist, auf das adaptive Verbindungsmodul (10) über die Montageschnittstellen (14, 15) wirkende und für ein Kollisionsereignis am Endeffektor (11) charakteristische Kräfte, mechanische Momente und/oder für ein Kollisionsereignis charakteristische Lageänderungen, Positionsänderungen und/oder Bewegungen zu erkennen. Die Nachgiebigkeitseinheit (13) stellt eine adaptive Kopplung zwischen den Montageschnittstellen (14, 15) bereitstellt. Bei Erkennen eines Kollisionsereignisses kann der Roboterarm gestoppt und in eine Ausgangslage bewegt werden.

## Beschreibung

### Gebiet der Erfindung

Die vorliegende Erfindung betrifft ein adaptives Verbindungsmodul für Roboterarme, ein Endeffektorsystem für Roboter und ein Robotersystem.

### Hintergrund

Die zu Grunde liegende Erfindung liegt insbesondere im Bereich des Greifens oder Aufnehmens von Objekten wie Werkstücken mittels eines Roboters, genauer mittels eines Roboterarms, beispielsweise mittels eines an einem distalen Ende eines Roboterarms montierten Greifwerkzeugs. Insbesondere kommen entsprechende Roboter mit Greifsystemen zum Einsatz bei der Entnahme von Werkstücken aus einem Behälter oder einer Kiste ("Griff-in-die-Kiste" oder auch bekannt als "Bin-Picking").

Bei Bin-Picking Anwendungen ist es bekannt, die Lage des zu greifenden Werkstücks durch Bilderkennung zu ermitteln, und die so ermittelte Lage zur Steuerung des Roboterarms zu verwenden. Allerdings sind entsprechende Bilderkennungssysteme als solche insoweit nachteilig, als diese eine nicht zu vernachlässigende Ungenauigkeit bei der Ermittlung der Position, Lage und/oder Ausrichtung des zu greifenden Werkstücks aufweisen, z.B. bei der Erfassung der Werkstücklänge und Werkstücklage, die je nach Anwendungsfall eine gewisse Toleranz aufweisen. Beispielsweise können bereits Ungenauigkeiten von 2 mm oder weniger zu Fehlern beim Greifen des Werkstücks und/oder Kollisionen des Greifwerkzeugs mit z.B. anderen Werkstücken führen. Bei vergleichsweise massiven Werkstücken können solche Kollisionen insbesondere auch Beschädigungen am Roboterarm oder am Greifwerkzeug verursachen. Insbesondere kann das der Fall sein, wenn sich z.B. die Lage, Position und/oder Ausrichtung eines Werkstücks nach deren Erfassung und entsprechender Ansteuerung des Roboterarms ändert/ändern. Solche Änderungen können beispielsweise verursacht werden durch instabile Lage des Werkstücks in dem Behälter oder durch externe Erschütterungen usw.. Weitere potenzielle Ursachen für Kollisionen können Ungenauigkeiten und/oder Variationen in der Form bzw. in den geometrischen Abmessungen von Werkstücken sein. Beispielsweise ist es auf dem Gebiet der Umform- und Schmiedetechnik vergleichsweise häufig, dass bereitgestellte und durch eine Umform- oder Schmiedemaschine weiterzuverarbeitende Rohlinge geometrisch von einer eingelernten "optimalen" Geometrie, z.B. einer CAD-Geometrie, abweichen. Ein Beispiel hierfür sind insbesondere abgescherte Rohlinge, die an der Scherfläche deutliche Verformungen aufweisen können.

Zwar sind Abschaltmechanismen zur Deaktivierung eines Roboterarms in Folge einer Kollision (z.B. Überlastschutz) bekannt, allerdings führen solche Abschaltsysteme in der Regel zu einem Stillstand des Roboters und erfordern eine manuelle Sichtprüfung bzw. Fehlerbeseitigung und Rückstellung des Roboterarms durch einen Bediener. Das ist nach einer Erkenntnis der Erfindung einerseits aufwändig und andererseits führt das zu Unterbrechungen im Handlingsablauf.

Im Bereich der Abschaltmechanismen für Roboterarme bei Kollision sind Kollisionsschutzelemente bekannt, welche eine Art Überlastschutz bereitstellen. Ein solcher Überlastschutz dient dazu, die im Falle einer Kollision auftretenden Kräfte auf den Roboterarm zu begrenzen, beispielsweise dadurch, dass eine Verschwenkung des kollidierenden Greifwerkzeugs relativ zum Roboterarm bei Überschreiten einer Maximalkraft erfolgt. Dies trägt insbesondere der Tatsache Rechnung, dass Roboterarme in Folge einer detektierten Kollision und einem unmittelbar kommandierten Notstopp auf Grund von Ansteuerzeiten und Trägheitsmomenten der Regel einen Nachlauf haben, durch welchen im Falle einer Kollision durchaus erhebliche Kräfte auftreten können.

Aus alledem wird ersichtlich, dass bekannte Bin-Picking Systeme nach einer Erkenntnis der Erfindung durchaus Verbesserungspotential haben, insbesondere mit Blick auf das Greifen bzw. Aufnehmen von Werkstücken und hinsichtlich Kollisionsverhalten.

Ausgehend davon ist es eine Aufgabe der zu Grunde liegenden Erfindung, die Nachteile im Stand der Technik, insbesondere für Bin-Picking Anwendungen, zu vermeiden oder zu bessern. Insbesondere soll ein verbessertes Robotersystem angegeben werden, sowie ein Endeffektorsystem für Roboter und ein adaptives Verbindungsmodul, die dazu eingerichtet sind, die Nachteile im Stand der Technik zumindest weitgehend zu vermeiden oder gar zu beseitigen.

Diese Aufgabe wird gelöst durch die Merkmale der Ansprüche 1, 8 und 10. Ausgestaltungen ergeben sich aus den abhängigen Ansprüchen und der nachfolgenden Beschreibung.

Die zu Grunde liegende Erfindung betrifft in einer Ausgestaltung insbesondere ein adaptives Verbindungsmodul, das zur Montage zwischen einem Roboterarm und einem mittels des Roboterarms zu bewegenden Endeffektor eingerichtet ist. Der Endeffektor ist eingerichtet zum Greifen und/oder zur Aufnahme, oder allgemein zur Handhabung, eines Objekts, beispielsweise eines Werkstücks, insbesondere eines Rohlings.

Bei dem Roboterarm handelt es sich vorzugsweise um einen für Industrieanwendungen eingerichteten mehrachsigen Roboterarm eines Roboters. Bei dem Endeffektor kann es sich beispielsweise um einen mechanischen, pneumatischen und/oder magnetischen Greifer zum Greifen, zur Aufnahme und/oder Handhabung eines Objekts, insbesondere eines Werkstücks, handeln.

In bevorzugten Ausgestaltungen ist der Roboterarm bzw. das adaptive Verbindungselement eingerichtet zur Verwendung bei Roboterarmen zum Greifen und/oder Handhaben von metallischen Werkstücken, vorzugsweise von Rohlingen, beispielsweise im technischen Zusammenhang mit Umform- oder Schmiedeanlagen. Beispielsweise kann das Handhaben des Werkstücks die Entnahme des Werkstücks aus einem Behälter oder aus einer Kiste ("Griff-in-die-Kiste" oder "Bin-Picking") umfassen, und/oder eine Beschickung einer Maschine oder Anlage zur Weiterverarbeitung oder Bearbeitung des Werkstücks, beispielsweise ein Rohling. Das Handhaben kann auch eine Entschickung einer Maschine oder Anlage, beispielsweise einer Umformanlage oder Schmiedemaschine, umfassen.

Das adaptive Verbindungselement umfasst eine Kollisionsschutzeinheit, eine damit (vorzugsweise unmittelbar) in Reihe geschaltete ein Nachgiebigkeitseinheit (oder: Kompensationseinheit, Compliance-Einheit), eine der Kollisionsschutzeinheit zugeordnete erste Montageschnittstelle (oder: erste Befestigungsschnittstelle) und eine der Nachgiebigkeitseinheit zugeordnete zweite Montageschnittstelle (oder: zweite Befestigungsschnittstelle).

Die Montageschnittstellen sind so ausgebildet und eingerichtet, dass das adaptive Verbindungsmodul über eine der Montageschnittstellen mit einem distalen Ende des Roboterarms und über die andere Montageschnittstelle mit dem Endeffektor zu verbinden ist, und dass im montierten Zustand die Kollisionsschutzeinheit und die Nachgiebigkeitseinheit zwischen dem distalen Ende des Roboterarms und dem Endeffektor in Reihe geschaltet sind.

In bevorzugten Ausgestaltungen kann die erste Montageschnittstelle beispielsweise unmittelbar an der Kollisionsschutzeinheit angebracht und/oder daran ausgebildet sein. Die zweite Montageschnittstelle kann in bevorzugten Ausgestaltungen beispielsweise an dem Nachgiebigkeitseinheit angebracht und/oder an dieser ausgebildet sein. Die Montageschnittstellen können in Ausgestaltungen beispielsweise als Montageflansche oder Montageflächen ausgebildet sein. Zur Montage des adaptiven Verbindungselements an dem Roboterarm einerseits und dem Endeffektor andererseits kommen beispielsweise lösbare Verbindungen, wie Schraubbefestigungen, in Betracht. Das distale Ende des Roboterarms und der Endeffektor können entsprechende komplementäre Montageschnittstellen aufweisen.

Vorzugsweise ist das adaptive Verbindungsmodul so ausgebildet und eingerichtet, dass dieses unter (Weiter-)Verwendung bekannter Roboterarme und/oder Endeffektoren und entsprechender Montageschnittstellen an Roboterarm und/oder Endeffektor, zwischen dem distalen Ende des Roboterarms und dem Endeffektor zwischenmontiert werden kann. Das bedeutet insbesondere, dass das hierin vorgeschlagene adaptive Verbindungsmodul auch bei bereits bekannten und im Betrieb befindlichen Robotersystemen nachgerüstet oder eingebaut werden kann.

Die Kollisionsschutzeinheit umfasst eine Sensoreinheit, welche dazu eingerichtet ist, auf das adaptive Verbindungsmodul über die Montageschnittstellen wirkende, z.B. durch externe Einflüsse eingetragene, und für ein Kollisionsereignis am Endeffektor bzw. am distalen Ende des Roboterarms, z.B. ein Kollisionsereignis des Endeffektors mit einer externen Komponente, charakteristische Kräfte, mechanische Momente, insbesondere Dreh-, Kipp- und/oder Biegekräfte oder -momente, und/oder für ein Kollisionsereignis charakteristische Lageänderungen, Positionsänderungen und/oder Bewegungen, beispielsweise des adaptiven Verbindungsmoduls und/oder der Kollisionsschutzeinheit, zu erkennen (oder: zu detektieren).

Die Sensoreinheit kann in vorteilhaften Ausgestaltungen beispielsweise ein oder mehrere Kraft- und/oder Momentsensoren umfassen ausgebildet zur Erzeugung von Sensorsignalen die repräsentativ für Kräfte und/oder Momente sind, welche über die Montageschnittstellen in das adaptive Verbindungsmodul eingetragen werden oder darauf wirken. Zur Detektion von Lageänderungen, Positionsänderungen und/oder Bewegungen können für die Sensoreinheit beispielsweise Wegemesssysteme und/oder Näherungsschalter verwendet werden. Weist das adaptive Verbindungsmodul beispielsweise ein Entlastungselement auf, das z.B. Teil der Nachgiebigkeitseinheit und/oder der Kollisionsschutzeinheit sein kann, so ist es möglich, Kollisionen anhand von Lage-, Positionsänderungen und/oder Bewegungen des Entlastungselements zu erkennen. Beispielsweise kann vorgesehen sein, dass das adaptive Verbindungsmodul, insbesondere die Kollisionsschutzeinheit und/oder das Entlastungselement, so eingerichtet ist/sind, dass diese/s bei einer Kollision, z.B. basierend auf einer Feder, einem federnden Element und/oder einem elastisch rückstellenden Element, verdrängt wird, die Form und/oder Lage ändert. Eine Bewegung, Lageänderung und/oder Positionsänderung kann dabei z.B. mittels eines Wegmesssystems und/oder mittels eines oder mehrerer Näherungsschalters ermittelt werden. Insbesondere kann vorgesehen sein, dass ein Wegemesssystem und/oder ein oder mehrere Näherungsschalter ein Verlassen einer vorgegebenen Position und/oder eine relative oder absolute Lageänderung bezüglich einer vorgegebenen Position erkennen.

Die Kollisionsschutzeinheit, insbesondere die Sensoreinheit, kann dazu eingerichtet sein, bei einem erkannten oder detektierten Kollisionsereignis, beispielsweise bei Einwirkung von kollisionscharakteristischen Kräften und/oder Momenten, ein Signal für eine Steuereinheit zur Kommandierung eines Nothalts für Roboterarms zu erzeugen, oder ein Steuersignal zur Kommandierung des Nothalts zu erzeugen. Die Sensoreinheit kann beispielsweise Teil einer Steuereinheit zur Bewegungssteuerung des Roboterarms sein oder eine Steuereinheit zur Bewegungssteuerung des Roboterarms bilden. Ein Nothalt kann beispielsweise durch in Soft- oder Hardware basierte Komponenten implementiert sein (z.B. programmierte oder programmierbare Steuerungen).

Die Nachgiebigkeitseinheit stellt eine adaptive Kopplung zwischen den Montageschnittstellen bereit. Unter einer adaptiven Kopplung soll dabei insbesondere verstanden werden, dass eine Relativbewegung der Montageschnittstellen zueinander möglich ist, beispielsweise eine Ausgleichsbewegung. Die Nachgiebigkeitseinheit dient insbesondere dazu, eine, z.B. flexible oder federnde, Relativbewegung der Montageschnittstellen zueinander in bestimmten Richtungen (z.B. Kippen, Drehen, Strecken und/oder Stauchen) zu ermöglichen, so dass bei ungenauer Positionierung des Endeffektors zu einem vom Endeffektor zu greifenden oder aufzunehmen Objekt eine Ausgleichsbewegung des Endeffektors hin zu einer korrekten Positionierung und Ausrichtung möglich ist. Mithin können die Sicherheit, Präzision und Anpassungsfähigkeit des Roboters bei der Interaktion dem Objekt verbessert werden.

In bevorzugten Ausgestaltungen handelt es sich bei der Nachgiebigkeitseinheit um eine mechanisch-passive Ausgleichseinheit, beispielsweise mit einem oder mehreren elastischen Rückstellkörpern, beispielsweise mit Feder- und/oder Elastomer- oder Gummielementen oder -körpern. Die Rückstellkörper können beispielsweise zwischen zwei voneinander beabstandeten Platten, Plattenkörper oder Rahmen angeordnet sein, die bei externer Krafteinwirkung eine (leichte) Verkippung und/oder Verdrehung der Platten, Plattenkörper oder Rahmen zueinander ermöglichen. Die mit den Montageschnittstellen in Reihe geschalteten Platten, Plattenkörper oder Rahmen ermöglichen mithin eine Verkippung und/oder Verdrehung der Montageschnittstellen zueinander. Allgemein ermöglicht die Nachgiebigkeitseinheit eine Veränderung der relativen Ausrichtung der Montageschnittstellen zueinander, was wiederum eine relative Ausrichtung des Endeffektors relativ zum distalen Ende des Roboterarms ermöglicht. Insbesondere ermöglicht die Nachgiebigkeitseinheit eine adaptive Ausrichtung der Montageschnittstellen zueinander, wenn z.B. im Anwendungsfall der Endeffektor zum Objekt oder Werkstück (z. B. geringfügig) falsch positioniert ist. Eine solche Falschpositionierung kann beispielsweise verursacht sein durch Ungenauigkeiten bei der Positions- und/oder Lageerfassung des Objekts oder Werkstücks durch ein Bilderfassungssystem.

Besonders vorteilhaft ist es, wenn die durch die Nachgiebigkeitseinheit im Rahmen einer Anpassung der Ausrichtung und/oder Position des Endeffektors an das zu greifende oder handzuhabende Objekt oder Werkstück in das adaptive Verbindungsmodul eingetragenen Kräfte und/oder Momente unterhalb der Detektionsschwelle oder Auslöseschwelle der Kollisionsschutzeinheit liegen. Damit kann vermieden werden, dass im Betrieb ggf. erforderliche Anpassungen der Ausrichtung und/oder Position des Endeffektors über die Nachgiebigkeitseinheit als ein Kollisionsereignis erkannt wird.

Das adaptive Verbindungsmodul ermöglicht insbesondere einen Betrieb eines Roboterarms, z.B. für Bin-Picking Aufgaben, bei dem einerseits eine ungenaue Positionierung des Endeffektors relativ zum Objekt oder Werkstück ausgeglichen oder kompensiert werden kann, insbesondere ohne erhöhten oder komplizierten Steuerungs- oder Regelungsaufwand, und bei dem andererseits der Roboterarm vor Kollisionsschäden, verursacht durch Kräfte und/oder Momente in Folge einer Kollision mit externen Objekten, wie weiteren Werkstücken, geschützt ist.

Das Verbindungsmodul ist mithin insbesondere dahingehend adaptiv, d.h. ein adaptives Verbindungsmodul, als dieses eine mehrfache Adaption an (veränderte und/oder unvorhergesehene) Umgebungsbedingungen ermöglicht, verursacht einerseits z.B. durch Fehlpositionierung des Endeffektors (z.B. infolge ungenauer optischer Lage- oder/oder Positionsbestimmung der Objekte oder Werkstücke oder unvorhersehbarer Lage- und/oder Positionsänderungen der Objekte oder Werkstücke) und andererseits durch Kollisionen mit externen Objekten. Insbesondere kann ein sicherer und beschädigungsfreier Betrieb eines Roboterarms erreicht werden.

In Ausgestaltungen kann die Sensoreinheit dazu eingerichtet sein, ein Kollisionssignal zu erzeugen, wenn für eine Kollision charakteristische Kräfte mechanische Momente, Bewegungen, Positionsänderungen und/oder Lageänderungen erkannt (oder: detektiert) werden. Die Sensoreinheit kann einen oder mehrere Sensoren aufweisen, die dazu eingerichtet sind, ein entsprechendes mechanisches Moment, eine Lageänderung, Positionsänderung oder eine Bewegung zu detektieren. Bei dem mechanischen Moment kann es sich insbesondere um Dreh-, Kipp- oder Biegekräfte oder -momente handeln, wobei entsprechende Sensoren als Kraft- oder Momentsensoren ausgebildet sein können. Zur Ermittlung von Lageänderungen, Positionsänderungen und/oder Bewegungen können Wegemesssysteme und/oder Näherungsschalter verwendet werden.

Die Sensoreinheit kann insbesondere derart eingerichtet sein, dass das Kollisionssignal dann erzeugt wird, wenn eine auf das adaptive Verbindungsmodul über die Montageschnittstellen wirkende Kraft, ein auf das adaptive Verbindungsmodul wirkendes Moment, detektierte Bewegungen, Auslenkungen, Positionsänderungen und/oder Lageänderungen usw., einen vorgegebenen oder vorgebbaren (insbesondere: einstellbar vorgebbaren) Schwellwert (oder: Grenzwert), insbesondere einen Kraft- oder Momentschwellwert (z.B. Schwellenmoment; Drehmomentschwelle; Biegemomentschwelle) und/oder einen Schwellwert für Bewegungen, Auslenkungen, Positionsänderungen und/oder Lageänderungen, überschreitet. Der Schwellwert, oder im Falle mehrerer Schwellwerte (z.B. für Biege-, Torsions-, Dreh- und Kippkräfte/-momente, Bewegungen, Auslenkungen, Positionsänderungen, Lageänderungen usw.) liegt dabei besonders vorteilhaft oberhalb derjenigen Kräfte, Momente, Bewegungen, Auslenkungen, Positionsänderungen und/oder Lageänderungen usw., welche bei einer im (regulären und kollisionsfreien) Betrieb erfolgenden adaptiven Kopplung über die Nachgiebigkeitseinheit auftreten oder entstehen können. Damit kann sichergestellt werden, dass eine durch die Nachgiebigkeitseinheit erfolgende Anpassung der Lage, Position und/oder Ausrichtung des Endeffektors nicht als Kollisionsereignis detektiert wird. Im praktischen Anwendungsfall kann beispielsweise vorgesehen sein, dass der Schwellwert oberhalb eines maximalen Kraft- oder Momentwerts und/oder oberhalb einer maximal auftretenden Positions-, Lageänderung und/oder Bewegung der adaptiven Kopplung durch die Nachgiebigkeitseinheit liegt. Besonders vorteilhaft kann es sein, wenn die Detektionsschwelle zur Detektion eines Kollisionsereignisses einstellbar ist, was beispielsweise eine Anpassung des adaptiven Verbindungsmoduls an unterschiedliche Anwendungsfälle ermöglicht. In diesem Zusammenhang kann es ferner von Vorteil sein, wenn Nachgiebigkeitskomponenten, wie Federn und/oder Elastomerkomponenten (insbesondere Gummikomponenten) hinsichtlich der Nachgiebigkeit einstellbar sind, oder wenn diese Komponenten austauschbar und/oder in der Position variabel sind. Dies ermöglicht ebenfalls eine Anpassung der Nachgiebigkeit im jeweiligen Anwendungsfall. Sollen beispielsweise vergleichsweise schwere oder massive Werkstücke gehandhabt werden, können für das Nachgiebigkeitsmodul Komponenten mit entsprechend hohem Elastizitätsmodul und/oder hoher Federkonstante verwendet werden. Bei der Handhabung von leichteren oder mechanisch vergleichsweise empfindlichen Objekten oder Werkstücken können Komponenten mit entsprechend kleinerem Elastizitätsmodul und/oder kleinerer Federkonstante verwende werden. Eine Einstellbarkeit des Schwellwerts der Kollisionsschutzeinheit ist auch insoweit von Vorteil als dadurch der Schwellwert so eingestellt werden kann, dass die bei der Bewegung des Objekts mit dem Roboterarm üblicherweise wirkenden Trägheitskräfte unterhalb des Schwellwerts liegen und mithin nicht als Kollisionsereignis erkannt bzw. detektiert werden. Ferner ist es möglich, Wegemesssysteme und/oder Näherungssysteme mit variabel einstellbaren Auslöseschwellen oder Schwellwerten vorzusehen.

In Ausgestaltungen kann das adaptive Verbindungsmodul des Weiteren eine Signalverarbeitungseinheit umfassen, die dazu eingerichtet ist, in Reaktion auf ein für den Endeffektor erkanntes oder detektiertes Kollisionsereignis ein Steuersignal zu erzeugen und bereitzustellen. Die Signalverarbeitungseinheit kann zumindest einen zur Erkennung eines Kollisionsereignisses ausgebildeten Sensor umfassen. Das Steuersignal kann beispielsweise derart eingerichtet sein, dass dieses einen Nothalt oder Notstopp des Roboterarms bewirkt oder kommandiert. Die Signalverarbeitungseinheit kann beispielsweise integraler Bestandteil des adaptiven Verbindungsmoduls sein oder als eine von Kollisionseinheit und der Nachgiebigkeitseinheit separate, insbesondere externe, Einheit ausgebildet sein, und beispielsweise Teil einer Steuerung für den Roboterarm bilden.

In Ausgestaltungen kann das Steuersignal, z.B. bei Ausführung und/oder Anwendung durch eine dem Roboterarm zugeordnete Steuerung, so eingerichtet sein, dass dieses:
- eine Anweisung für einen sofortigen Bewegungsstopp (oder: Notstopp) für eine laufende Bewegung des Roboterarms signalisiert oder darstellt, und/oder
- eine Anweisung für eine Bewegung des Roboterarms zu einer Ausgangsposition signalisiert oder darstellt, und/oder
- eine Anweisung für eine Bewegung des Roboterarms zu einer Ausgangsposition einer zyklischen Bewegung oder eines Teils einer zyklischen Bewegung des Roboterarms, und eine Anweisung zur Wiederholung, insbesondere adaptiven Wiederholung, der Bewegung des Roboterarms ausgehend von der Ausgangsposition signalisiert oder darstellt.

Insbesondere kann das adaptive Verbindungsmodul in besonders bevorzugten Ausgestaltungen dazu eingerichtet sein, im Falle eines Kollisionsereignisses einen Notstopp und im Anschluss daran eine Bewegung des Roboterarms zu einer Ausgangsposition zu bewirken bzw. zu kommandieren. Das bietet den Vorteil, dass das Robotersystem abgesehen von der zwischenzeitlichen Rückführung in die Ausgangsposition, auch bei auftretenden Kollisionen im Wesentlichen kontinuierlich mit vergleichsweise geringen Unterbrechungszeiten arbeiten kann, insbesondere im Vergleich mit bekannten Systemen, bei welchen nach einem Notstopp der weitere Betrieb eingefroren und ein benutzerseitiger Eingriff erforderlich ist, um das System wieder in einen Ausgangszustand zu versetzen, der einen Weiterbetrieb ermöglicht.

Zur Lageermittlung der Werkstücke können ein oder mehrere optische Sensoren, wie z.B. Kameras oder Kamerasysteme, vorhanden sein. Die optischen Sensoren können z.B. stationär bezüglich der zu greifenden Werkstücke angeordnet sein und/oder am Roboterarm und/oder am adaptiven Verbindungselement angebracht sein. Bei den optischen Sensoren kann es sich z.B. um Bild- und/oder Videosensoren handeln. Insbesondere können ein oder mehrere optische Sensoren vorgesehen und so angeordnet und eingerichtet sein, dass diese z.B. bei einer stationären Montage oder bei einer Montage am Roboterarm bzw. am adaptiven Verbindungsmodul im ordnungsgemäßen Betrieb Umgebungsobjekte erfassen und/oder erkennen und/oder eine Position, Orientierung und/oder Ausrichtung eines mit dem Endeffektor handzuhabenden Objekts erfassen und/oder ermitteln. Basierend auf Daten der optischen Sensoren beispielsweise zur Lage, Position und/oder Ausrichtung eines handzuhabenden Objekts, Werkstücks, oder Bauteils kann eine Signalverarbeitungseinheit Steuersignale zur Bewegung des Roboterarms ermitteln und die Bewegung des Roboterarms entsprechend kommandieren (oder: Steuern oder Regeln). Sind z.B. eine oder mehrere der optischen Sensoren und/oder eine zugeordnete Signalverarbeitungseinheit dazu eingerichtet, andere Objekte als die Werkstücke zu erkennen oder zu detektieren, können diese Daten z.B. auch zur Kollisionsvermeidung verwendet werden.

Das adaptive Verbindungsmodul bietet auch bei Ausgestaltungen mit optischen Sensoren eine (intrinsische) Adaptivität mit Blick auf mögliche Ungenauigkeiten der optischen Ermittlung oder Erfassung von Objekten, Formabweichungen bei Werkstücken, mögliche Einschränkungen des Sichtfelds des optischen Sensors im jeweiligen Anwendungsfall, unvorhergesehene Positions-, Lage- oder Ausrichtungsänderungen des handzuhabenden Objekts in Folge von Vibrationen oder Erschütterungen usw.. Formabweichungen bei Werkstücken können beispielsweise resultieren aus vorangehenden Be- oder Verarbeitungsschritten, wie beispielsweise Umform- oder Schmiedeprozesse (unterschiedliche Gratbildung, Längenänderung usw.).

In Ausgestaltungen kann die Nachgiebigkeitseinheit eine oder mehrere elastische und/oder fluidische, insbesondere elastisch und/oder fluidisch rückstellende, Kompensationseinheiten oder -körper, insbesondere Nachgiebigkeitselemente, umfassen. Solche Elemente können Feder- und/oder Elastomerkomponenten umfassen. Insbesondere kommen Federsysteme, Gummipuffersysteme, und/oder pneumatisch und/oder hydraulische Systeme in Betracht. Die Nachgiebigkeitselemente sind insbesondere dazu eingerichtet und ermöglichen eine Relativbewegung der beiden Montageschnittstellen zueinander, wenn im Anwendungsfall eine Abweichung zwischen der Position und/oder Ausrichtung des handzuhabenden Objekts und der Position und/oder Ausrichtung des Endeffektors vorliegt. Die Nachgiebigkeitselemente ermöglichen eine Kompensation solcher Abweichungen, indem diese z.B. korrektive Kipp-, Dreh-, und/oder Schwenkbewegungen ermöglichen. Vorzugsweise sind die Nachgiebigkeitselemente passive Elemente, wie Federn oder Gummipuffer. Rückstellend soll in diesem Zusammenhang insbesondere bedeuten, dass die Nachgiebigkeitselemente nach einer Formänderung oder Auslenkung zur Kompensation einer Abweichung die ursprüngliche Form und Ausrichtung annehmen.

In Ausgestaltungen kann die Kollisionsschutzeinheit, z.B. neben oder zusätzlich zu einer Sensor-basierten Erkennung oder Erfassung eines Kollisionsereignisses ferner, ein mechanisches Auslöseelement aufweisen, welches beim Einwirken eines Kollisionsmoments eine dem Kollisionsmoment entgegengesetzte Auslenkung, insbesondere elastisch oder fluidische, vorzugsweise selbständig rückstellende, Auslenkung und/oder eine Entkopplung der beiden Montageschnittstellen bewirkt. Das Auslöseelement kann aktiv, dynamisch oder passiv ausgebildet sein. Insbesondere ermöglicht das Auslöseelement eine Notfallbewegung oder eine Notfallauslenkung, beispielsweise nach Art eines Freilaufs, der Montageschnittstellen zueinander. Eine solche Notfallauslenkung bewirkt beispielsweise, dass eine, z.B. durch Trägheitseffekte oder jeweilige Ansteuerzeiten, verursachte Weiterbewegung des Roboterarms bei einem kommandierten Notstopp für ein Kollisionsereignis abgefangen bzw. kompensiert werden kann, ohne dass am Roboterarm durch die trägheitsbedingte Weiterbewegung bei einem Notstopp kollisionsbedingte Beschädigungen auftreten.

In Ausgestaltungen ist ein Endeffektorsystem für Roboter vorgesehen. Das Endeffektorsystem für Roboter umfasst zumindest ein adaptives Verbindungselement nach einer der hierin beschriebenen Ausgestaltungen. Dabei kann nach bevorzugten Ausgestaltungen die erste Montageschnittstelle ausgebildet sein zur Montage an einem distalen Ende eines Roboterarms und die zweite Montageschnittstelle kann ausgebildet sein zur Montage eines Endeffektors.

In Ausgestaltungen umfasst das Endeffektorsystem für Roboter des Weiteren einen Endeffektor, welcher vorzugsweise an der zweiten Montageschnittstelle montiert ist. Bei dem Endeffektor kann es sich um einen Vakuumgreifer, einen Magnetgreifer oder um ein mechanisches Greifsystem oder eine Kombination derselben handeln.

In besonders bevorzugten Ausgestaltungen ist das Endeffektorsystem eingerichtet zum Bin-Picking ("Griff-in-die-Kiste") bzw. für Bin-Picking Anwendungen.

In Ausgestaltungen ist ein Robotersystem vorgesehen. Das Robotersystem umfasst zumindest einen Roboterarm, insbesondere einen mehrachsigen Roboterarm, mit einem distalen Ende, an welchem, unter Zwischenschaltung eines adaptiven Verbindungsmoduls nach einer der hierin beschriebenen Ausgestaltungen, ein Endeffektor montiert ist, oder an welchem ein Endeffektorsystem nach einer der hierin beschriebenen Ausgestaltungen montiert ist.

In Ausgestaltungen des Robotersystems umfasst dieses des Weiteren zumindest eine Steuereinheit, bei welcher es sich beispielsweise um die oben genannte Signalverarbeitungseinheit handeln kann, oder welche beispielsweise Teil der Signalverarbeitungseinheit ist oder diese umfasst oder umgekehrt.

Die Steuereinheit ist mit der Sensoreinheit (der Kollisionsschutzeinheit) signaltechnisch verbunden, wobei die Sensoreinheit dazu eingerichtet ist, bei einem erkannten oder detektierten, insbesondere während einer Bewegung des Roboterarms auftretenden, Kollisionsereignis, ein Kollisionssignal zu erzeugen und der Steuereinheit bereitzustellen. Die Steuereinheit ist dazu eingerichtet, in Reaktion auf den Empfang des Kollisionssignals die Bewegung des Roboterarms zu stoppen (Notstopp, Nothalt) und/oder den Roboterarm und den Endeffektor in eine vorgegebene Ausgangslage zu steuern.

In Ausgestaltungen ist die Steuereinheit ferner dazu eingerichtet, nach Steuerung des Roboterarms in die vorgegebene Ausgangslage, ausgehend von der Ausgangslage einen weiteren Bewegungsprozess oder -zyklus des Roboterarms oder zumindest einen Teil eines solchen Bewegungsprozesses oder -zyklus zu steuern (oder: zu kommandieren). Das ermöglicht im Falle eines detektierten Kollisionsereignisses eine Verkürzung der Stillstandzeit, da, anders als bei bekannten Systemen, ein Benutzereingriff zur Rückstellung oder zum Rücksetzen des Roboterarms nicht zwingend erforderlich ist.

In besonders bevorzugten Ausgestaltungen ist das Robotersystem eingerichtet als ein Bin-Picking-System zur Entnahme eines Objekts, insbesondere eines Werkstücks, aus einem Behälter.

In Ausgestaltungen kann Endeffektor eine oder mehrere mechanische, pneumatische und/oder magnetische Handhabungseinheiten, insbesondere Greifer oder Greifeinrichtungen umfassen. In Frage kommen insbesondere Vakuumgreifer, Magnetgreifer und mechanische Greifsysteme oder Kombinationen daraus.

In Ausgestaltungen ist ein System, beispielsweise eine Umformanlage, vorgesehen, das zumindest ein Robotersystem nach einem der hierin beschriebenen Ausgestaltungen und eine oder mehrere Umformmaschinen, wie z.B. Schmiedemaschinen oder Pressen, zur Umformung, insbesondre zum Schmieden oder Pressen, von Werkstücken umfasst. Das zumindest eine Robotersystem ist dabei eingerichtet und ausgebildet zur Beschickung zumindest einer der Umformmaschinen mit Werkstücken, insbesondere Rohlingen.

In Ausgestaltungen des Systems, kann dieses des Weiteren einen Bereitstellungsbereich für die Werkstücke umfassen, beispielsweise einen Behälter oder eine Kiste. Das Robotersystem kann dabei dazu eingerichtet sein, mittels des Endeffektors oder des Endeffektorsystems Werkstücke im Bereitstellungsbereich aufzunehmen und der Umformmaschine zur Bearbeitung bzw. zur Umformung durch die Umformmaschine zuzuführen.

Die Werkstücke können im Bereitstellungsbereich, z.B. in einem Behälter oder einer Kiste, sortiert oder unsortiert, vorliegen.

Mithin kann das System als eine Umformmaschine mit Bin-Picking-Vorrichtung, welche durch das Robotersystem umgesetzt werden kann, ausgebildet sein. Ferner ist es möglich, dass das Robotersystem als Bin-Picking-Robotersystem ausgebildet und eingerichtet ist, das es ermöglicht, aus einem Bereitstellungsbereich, z.B. aus einem Behälter oder einer Kiste, Werkstücke zu entnehmen, wobei die Werkstücke sortiert oder unsortiert vorliegen können.

Nachfolgend werden beispielhafte Ausrührungsformen der Erfindung anhand der anliegenden Figuren beschrieben. In den Figuren sind gleiche und funktionsgleiche Komponenten mit gleichen Bezugszeichen bezeichnet. Es zeigen schematisch:
- FIG.1: ein Robotersystem mit einem Endeffektorsystem mit einem adaptiven Verbindungsmodul;
- FIG. 2: das Endeffektorsystem;
- FIG. 3: das adaptive Verbindungsmodul;
- FIG. 4: das adaptive Verbindungsmodul in einem Betriebszustand betreffend die Nachgiebigkeitseinheit; und
- FIG. 5: eine Draufsicht auf das adaptive Verbindungsmodul in einem Betriebszustand betreffend die Kollisionsschutzeinheit.

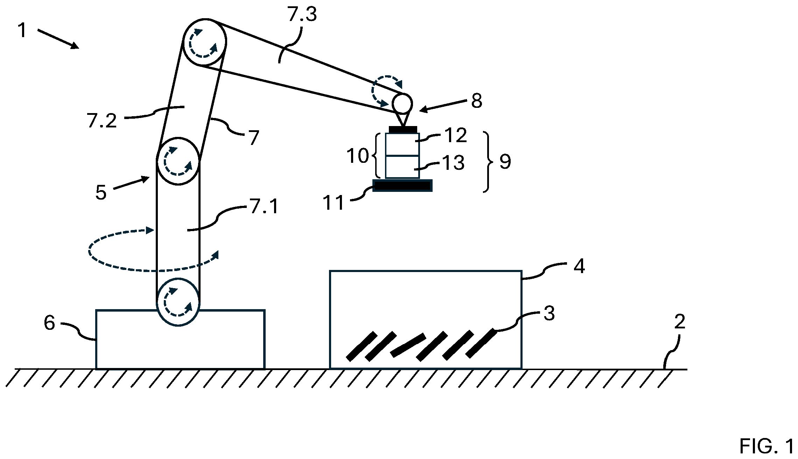

FIG. 1 zeigt ein Robotersystem 1, das im vorliegenden Beispiel als sog. Bin-Picking System ausgebildet ist. Das Robotersystem 1 ist auf einem Untergrund 2 montiert, und ist dazu eingerichtet, Werkstücke 3, z.B. Metall-Rohlinge zur Weiterverarbeitung beispielsweise durch Umformen oder Schmieden, aus einem Behälter 4 oder einer Kiste zu entnehmen und z.B. einer (nicht gezeigten) Zuführung zu einer Verarbeitungsmaschine oder der Verarbeitungsmaschine direkt zuzuführen.

Das Robotersystem 1 umfasst einen Roboter 5, insbesondere einen Industrieroboter, mit einem auf einem Podest 6 um eine vertikale Achse drehbar gelagerten Roboterarm 7, welcher im vorliegenden Beispiel (und nicht beschränkend) drei Armsegmente 7.1-7.3 aufweist, die aneinander jeweils drehbar gelagert sind (strichlinierte Doppelpfeile). Bei dem Roboterarm 7 handelt es sich mithin um einen mehrachsigen Roboterarm.

Der Roboterarm 7 weist an seinem distalen Ende 8 einen Befestigungsflansch oder anderweitige Befestigungselemente auf, die eingerichtet sind zur Montage eines Endeffektorsystems 9.

Das Endeffektorsystem 9 weist im vorliegenden Beispiel ein adaptives Verbindungsmodul 10 und einen Endeffektor 11 auf, bei welchem es sich beispielsweise um einen Magnetgreifer, einen Vakuumgreifer oder einen mechanischen Greifer oder eine Kombination derselben handeln kann. Das adaptive Verbindungsmodul 10 wiederum umfasst eine Kollisionsschutzeinheit 12 und eine Nachgiebigkeitseinheit 13.

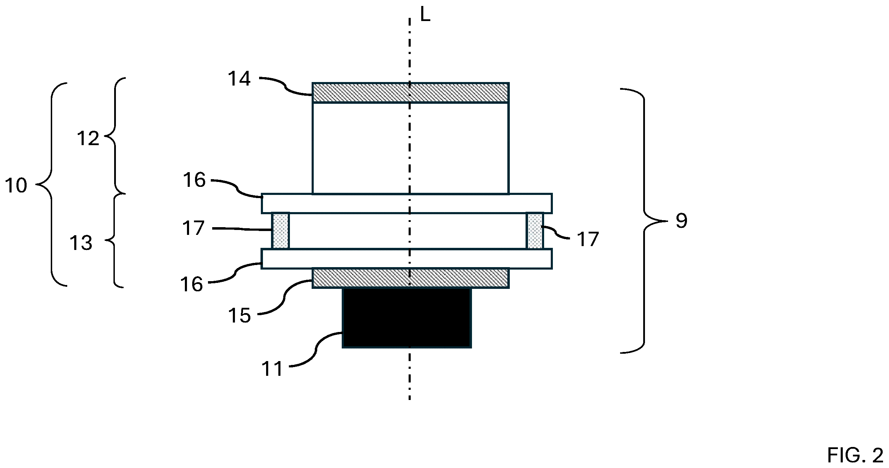

FIG. 2 zeigt beispielhaft ein Endeffektorsystem 9 im Detail. Das adaptive Verbindungselement 10 mit Kollisionsschutzeinheit 12 und Nachgiebigkeitseinheit 13 sind in Richtung der Längsachse L in Reihe geschaltet, wobei, im vorliegenden Beispiel und in Zusammenschau mit FIG. 1, ausgehend vom distalen Ende 8 die Nachgiebigkeitseinheit 13 der Kollisionsschutzeinheit 12 unmittelbar nachgeschaltet ist. Eine Anordnung in umgekehrter Reihenfolge ist ebenfalls möglich.

Konkret weist die Kollisionsschutzeinheit 12 eine erste Montageschnittstelle 14 auf und die Nachgiebigkeitseinheit 13 weist eine zweite Montageschnittstelle 15 auf. Im montierten Zustand ist das adaptive Verbindungsmodul 10 über die erste Montageschnittstelle 14 am Befestigungsflansch des distalen Endes 8 des Roboterarms 7 montiert (z.B. über Schraubverbindungen). Ferner ist an der zweiten Montageschnittstelle 15 der Endeffektor 11 (z.B. über Schraubverbindungen) montiert. Mithin ist das adaptive Verbindungsmodul 10 zwischen dem distalen Ende 8 des Roboterarms 7 und dem Endeffektor 11 zwischengeschaltet, wobei die Kollisionsschutzeinheit 12 und die Nachgiebigkeitseinheit 13 in Reihe geschaltet sind.

Im Beispiel der FIG. 2 weist die Nachgiebigkeitseinheit 13 zwei voneinander in Richtung der Längsachse L beabstandete und (im unbelasteten Zustand) im Wesentlichen parallel zueinander verlaufende Plattenkörper 16 auf, welche mittels Elastomer- und/oder Federkörper 17 miteinander verbunden sind. Im Beispiel der Fig. 2 sind lediglich zwei solcher Körper 17 gezeigt. Die Anzahl und Anordnung der Körper 17 kann jedoch je nach Nachgiebigkeitsanforderung und z.B. gewünschten Elastizitäts- und/oder Federmodul variieren. Als Elastomerkörper eignen sich beispielsweise Gummikörper oder Gummipuffer.

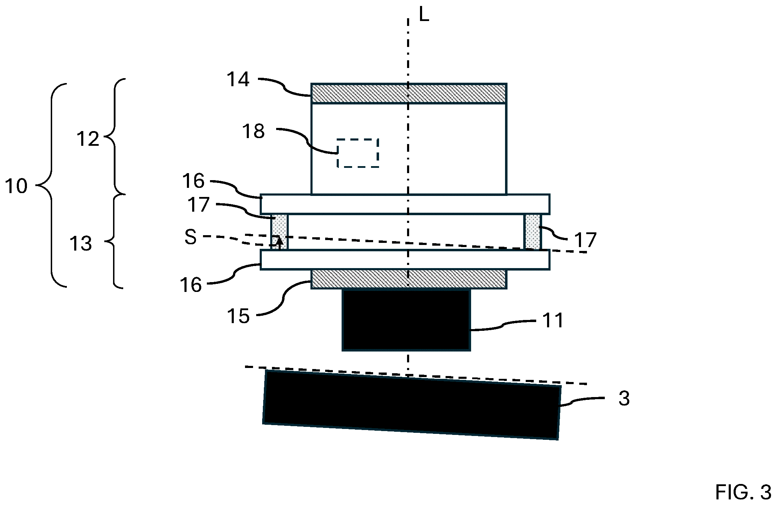

FIG. 3 zeigt das adaptive Verbindungsmodul der FIG. 2. Die Kollisionsschutzeinheit 12 umfasst eine (lediglich schematisch gezeigte) Sensoreinheit 18. Die Sensoreinheit ist dazu eingerichtet, auf das adaptive Verbindungsmodul 10 über die erste und zweite Montageschnittstelle 14, 15 wirkende und in das adaptive Verbindungsmodul eingetragene, für ein Kollisionsereignis des Endeffektors 11 mit einem externen Objekt oder Hindernis charakteristische Kräfte mechanische Momente, Bewegungen, Lageänderungen und/oder Positionsänderungen zu erkennen. Bei den mechanischen Momenten kann es sich beispielsweise um Dreh-, Kipp- und/oder Biegekräfte oder -momente handeln. Zur Ermittlung von Kollisionsereignissen basierend auf Bewegungen, Lageänderungen und/oder Positionsänderungen kommen relative und/oder absolute Änderungen in Betracht, die z.B. mittels Wegemesssystemen, Näherungssensoren und/oder -schaltern ermittelt werden können.

Die Nachgiebigkeitseinheit 13 stellt über die Elastomer- und/oder Federkörper 17 eine adaptive Kopplung zwischen der ersten und der zweiten Montageschnittstelle 14, 15 bereit. Diese adaptive Kopplung ermöglicht eine Anpassung der Lage und/oder Ausrichtung des Endeffektors 11 relativ zum distalen Ende 8 des Roboterarms 7 und mithin zum Werkstück 3, beispielsweise wenn ein mit dem Endeffektor 11 zu greifendes oder aufzunehmendes Werkstück 3 bei einem Bin-Picking Vorgang, d.h. bei der Entnahme des Werkstücks 3 aus dem Behälter 4, das Werkstück 3 und der Endeffektor 11 nicht optimal zueinander ausgerichtet sind.

Beispielhaft ist das in FIG. 3 durch strichlinierte Linien veranschaulicht. Im Beispiel der FIG. 3 ist das Werkstück 3 leicht schräg zum Endeffektor ausgerichtet, was beispielsweise verursacht sein kann durch Ungenauigkeiten bei der Positions- oder Lagebestimmung des Werkstücks 3 basierend auf optischen Sensoren.

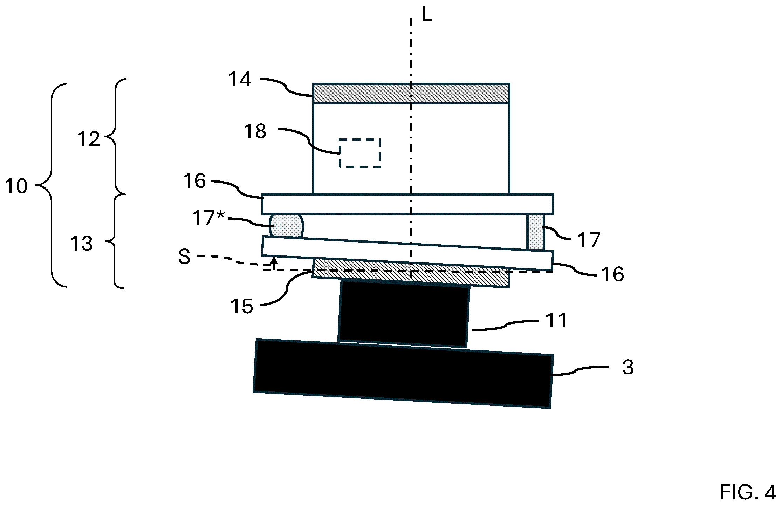

Wird der Endeffektor 11 nun durch eine Abwärtsbewegung des Roboterarms 7 nach unten zum Werkstück 3 hinbewegt, so ermöglichen die Elastomer- und/oder Federkörper 17 eine Verkippung der Plattenkörper 16 zueinander, indem beispielsweise einer oder mehrere der Elastomer- und/oder Federkörper 17 elastisch gestaucht werden (S). Der Zustand mit elastischer Stauchung S ist in FIG. 4 schematisch dargestellt. Durch die Nachgiebigkeitseinheit 13 können sich die zweite Montageschnittstelle 15 und damit der Endeffektor 11 so ausrichten, dass das Werkstück 3 durch den Endeffektor 11 sicher aufgenommen werden kann. Nach Wegfall der für die Stauchung S ursächlichen Kräfte oder Momente nimmt der gestauchte Elastomer- und/oder Federkörper 17* aufgrund der elastisch rückstellenden Eigenschaften wieder seine ursprüngliche Form an, so dass die Plattenkörper 16 wieder im Wesentlichen parallel zueinander gelegen sind.

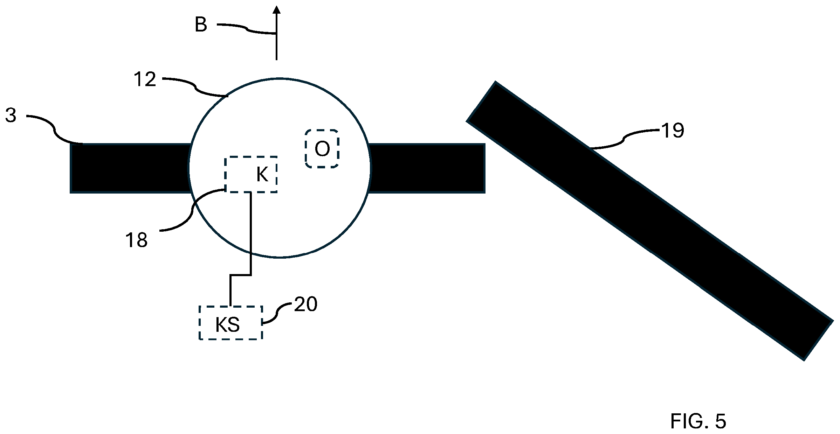

FIG. 5 zeigt schematisch eine Draufsicht auf das adaptive Verbindungsmodul 10 in einem Betriebszustand betreffend die Kollisionsschutzeinheit 12. In FIG. 5 ist angedeutet, dass das Endeffektorsystem 9 mit einem gegriffenen Werkstück 3 eine Bewegung B (im Beispiel der FIG. 5 nach oben) ausführt. Im Bewegungspfad des Werkstücks 3 befindet sich ein externes Objekt 19 z.B. ein in dem Behälter 4 befindliches weiteres Werkstück 3. Trifft nun das Werkstück 3 bei der Bewegung B auf das externe Objekt 19, erzeugt die Sensoreinheit 18 der Kollisionsschutzeinheit 13, ein Kollisionssignal K, wenn für eine Kollision charakteristische Kräfte und/oder mechanische Momente erkannt werden. Das Kollisionssignal K dann erzeugt werden, wenn eine auf das adaptive Verbindungsmodul 10 über die Montageschnittstellen 14, 15 wirkende Kraft und/oder ein auf das adaptive Verbindungsmodul 10 über die Montageschnittstellen 14, 15 wirkendes Moment einen vorgegebenen oder vorgebbaren Schwellwert überschreitet. Der Schwellwert kann z.B. in Abhängigkeit eines vom Roboterarm 7 maximal und beschädigungsfrei aufnehmbaren Moments oder einer von diesem maximal und beschädigungsfrei aufnehmbaren Kraft ermittelt werden.

Der Sensoreinheit 18 kann eine (in FIG. 5 lediglich schematisch dargestellte) Signalverarbeitungseinheit 20 zugeordnet sein, die dazu eingerichtet ist, in Reaktion auf ein für den Endeffektor 11 erkanntes Kollisionsereignis (z.B. basierend auf dem Kollisionssignal K) ein Steuersignal KS zu erzeugen und bereitzustellen. Das Steuersignal KS ist derart eingerichtet und wird vorzugsweise derart verarbeitet, beispielsweise durch die Signalverarbeitungseinheit 20 oder eine z.B. weitere (nicht gezeigte) Steuereinheit des Robotersystems 1, dass dieses einen sofortigen Bewegungsstopp für die laufende Bewegung B des Roboterarms 7 bewirkt, und vorzugsweise den Roboterarm dazu veranlasst, sich in eine Ausgangsposition zu bewegen. In Ausgestaltungen kann das Steuersignal KS bewirken oder so verarbeitet werden, dass der Roboterarm 7 eine Ausgangsposition einer zyklischen Bewegung oder eines Teils einer zyklischen Bewegung einnimmt, und ausgehend von der Ausgangsposition (oder Reset-Position) zumindest einen Teil einer zyklischen Bewegung ausführt.

Optional kann das adaptive Verbindungsmodul 10 des Weiteren einen oder mehrere optischen Sensoren O, wie Kameras oder Kamerasysteme und dgl., aufweisen, die so angeordnet und eingerichtet sind, dass bei einer Montage des adaptiven Verbindungsmoduls 10 an dem distalen Ende 8 des Roboterarms 7, im ordnungsgemäßen Betrieb Umgebungsobjekte erfasst und/oder erkannt und/oder eine Position, Orientierung und/oder Ausrichtung eines mit dem Endeffektor 11 handzuhabenden Werkstücks 3 erfasst und/oder ermittelt werden können. Die erfasste Position, Orientierung und/oder Ausrichtung kann zur Bewegungssteuerung des Roboterarms 7 durch eine Steuereinheit verwendet werden. Optische Sensoren können auch oder alternativ stationär bezüglich des Behälters 4, aus welchem die Werkstücke 3 entnommen werden sollen, angebracht sein.

Das Robotersystem 1 kann zumindest eine (nicht dargestellte) Steuereinheit umfassen, welche mit der Sensoreinheit 18 signaltechnisch verbunden ist. Die Sensoreinheit 18 kann dabei dazu eingerichtet sein, bei einem erkannten oder detektierten, insbesondere während einer Bewegung des Roboterarms 7 auftretenden, Kollisionsereignis, das Kollisionssignal K zu erzeugen und der Steuereinheit bereitzustellen. Die Steuereinheit kann dazu eingerichtet sein, in Reaktion auf den Empfang des Kollisionssignals K die Bewegung des Roboterarms 7 zu stoppen und/oder den Roboterarm 7 und den Endeffektor 11 in eine vorgegebene Ausgangslage zu steuern. Die Steuereinheit kann ferner dazu eingerichtet sein, nach Steuerung des Roboterarms 7 in die vorgegebene Ausgangslage, und ausgehend von der Ausgangslage einen weiteren Bewegungsprozess oder -zyklus des Roboterarms 7 zu steuern. Die Steuereinheit kann die Signalverarbeitungseinheit 20 umfassen oder umgekehrt und/oder die Steuereinheit kann Teil der Signalverarbeitungseinheit 20 sein oder umgekehrt.

Insgesamt zeigt sich, dass die hierin vorgeschlagene Erfindung die zu Grunde liegende Aufgabenstellung löst.

### Bezugszeichenliste

- 1: Robotersystem
- 2: Untergrund
- 3: Werkstück
- 4: Behälter
- 5: Roboter
- 6: Podest
- 7: Roboterarm
- 7.1-7.3: Armsegmente
- 8: distales Ende
- 9: Endeffektorsystem
- 10: adaptives Verbindungsmodul
- 11: Endeffektor
- 12: Kollisionsschutzeinheit
- 13: Nachgiebigkeitseinheit
- 14: erste Montageschnittstelle
- 15: zweite Montageschnittstelle
- 16: Plattenkörper
- 17: Elastomer- und/oder Federkörper
- 18: Sensoreinheit
- 19: externes Objekt
- 20: Signalverarbeitungseinheit

- B: Bewegung
- L: Längsachse
- O: optischer Sensor
- S: Stauchung

## Patentansprüche

1. Adaptives Verbindungsmodul (10) für Roboterarme (7), welches eingerichtet ist zur Montage zwischen einem Roboterarm (7) und einem mittels des Roboterarms (7) zu bewegenden Endeffektor (11), wie einem mechanischen, pneumatischen und/oder magnetischen Greifer, zum Greifen, oder Aufnahme und/oder Handhabung eines Objekts (3), insbesondere eines Werkstücks (3), umfassend eine Kollisionsschutzeinheit (12), eine damit in Reihe geschaltete ein Nachgiebigkeitseinheit (13), eine der Kollisionsschutzeinheit (12) zugeordnete erste Montageschnittstelle (14) und eine der Nachgiebigkeitseinheit (13) zugeordnete zweite Montageschnittstelle (15), wobei:
a) die Montageschnittstellen (14, 15) so ausgebildet sind, dass das adaptive Verbindungsmodul (10) über eine der Montageschnittstellen (14) mit einem distalen Ende (8) des Roboterarms (7) und über die andere Montageschnittstelle (15) mit dem Endeffektor (11) zu verbinden ist, und die Kollisionsschutzeinheit (12) und die Nachgiebigkeitseinheit (13) zwischen dem distalen Ende (8) des Roboterarms (7) und dem Endeffektor (11) in Reihe geschaltet sind,
b) die Kollisionsschutzeinheit (12) eine Sensoreinheit (18) umfasst, welche dazu eingerichtet ist, auf das adaptive Verbindungsmodul (10) über die Montageschnittstellen (14, 15) wirkende und für ein Kollisionsereignis am Endeffektor (11) charakteristische Kräfte und/oder mechanische Momente, insbesondere Dreh-, Kipp- und/oder Biegekräfte oder -momente, und/oder für ein Kollisionsereignis charakteristische Lageänderungen, Positionsänderungen und/oder Bewegungen zu erkennen; und
c) die Nachgiebigkeitseinheit (13) eine adaptive Kopplung zwischen
den Montageschnittstellen (14, 15) bereitstellt.

2. Adaptives Verbindungsmodul (10) nach Anspruch 1, wobei die Sensoreinheit (18) dazu eingerichtet ist, ein Kollisionssignal zu erzeugen, wenn für eine Kollision charakteristische Kräfte, mechanische Momente, Lageänderungen, Positionsänderungen und/oder Bewegungen erkannt werden, wobei das Kollisionssignal dann erzeugt wird, wenn eine auf das adaptive Verbindungsmodul (10) über die Montageschnittstellen (14, 15) wirkende Kraft, ein auf das adaptive Verbindungsmodul (10) über die Montageschnittstellen (14, 15) wirkendes Moment, Lageänderungen, Positionsänderungen und/oder Bewegungen am adaptiven Verbindungsmodul, insbesondere an der Kollisionsschutzeinheit, einen vorgegebenen oder vorgebbaren Schwellwert überschreitet.

3. Adaptives Verbindungsmodul (10) Anspruch 1 oder 2, umfassend des Weiteren eine Signalverarbeitungseinheit (20), die dazu eingerichtet ist, in Reaktion auf ein für den Endeffektor (11) erkanntes Kollisionsereignis ein Steuersignal (K, KS) zu erzeugen und bereitzustellen.

4. Adaptives Verbindungsmodul (10) nach Anspruch 3, wobei das Steuersignal (K, KS) derart eingerichtet ist, dass dieses:
- eine Anweisung für einen sofortigen Bewegungsstopp für eine laufende Bewegung des Roboterarms (7) signalisiert oder darstellt, und/oder
- eine Anweisung für eine Bewegung des Roboterarms (7) zu einer Ausgangsposition signalisiert oder darstellt, und/oder
- eine Anweisung für eine Bewegung des Roboterarms (7) zu einer Ausgangsposition einer zyklischen Bewegung oder eines Teils einer zyklischen Bewegung des Roboterarms (7), und eine Anweisung zur Wiederholung, insbesondere adaptiven Wiederholung, der Bewegung des Roboterarms (7) ausgehend von der Ausgangsposition signalisiert oder darstellt.

5. Adaptives Verbindungsmodul (10) nach einem der vorangehenden Ansprüche, wobei die Nachgiebigkeitseinheit (13) eine oder mehrere elastische und/oder fluidische, insbesondere elastisch und/oder fluidisch rückstellende, Kompensationseinheiten oder -körper (17) umfasst.

6. Adaptives Verbindungsmodul (10) nach einem der vorangehenden Ansprüche, wobei die Kollisionsschutzeinheit (12) ein mechanisches Auslöseelement aufweist, welches beim Einwirken eines Kollisionsmoments eine dem Kollisionsmoment entgegengesetzte Auslenkung, insbesondere elastisch oder fluidische, vorzugsweise selbständig rückstellende, Auslenkung und/oder eine Entkopplung der beiden Montageschnittstellen (14, 15) bewirkt.

7. Endeffektorsystem (9) für Roboter (5) umfassend zumindest ein adaptives Verbindungselement (10) nach einem der Ansprüche 1 bis 6, wobei die erste Montageschnittstelle (14) vorzugsweise ausgebildet ist zur Montage an einem distalen Ende (8) eines Roboterarms (7) des Roboters (5) und die zweite Montageschnittstelle (15) vorzugsweise ausgebildet ist zur Montage eines Endeffektors (11).

8. Endeffektorsystem (9) für Roboter (5) nach Anspruch 7, umfassend des Weiteren einen Endeffektor (11), welcher vorzugsweise an der zweiten Montageschnittstelle (15) montiert ist.

9. Robotersystem (1) umfassend zumindest einen Roboter (5) mit einem Roboterarm (7) mit einem distalen Ende (8), an welchem, unter Zwischenschaltung eines adaptiven Verbindungsmoduls (10) nach einem der Ansprüche 1 bis 6, ein Endeffektor (11) montiert ist, oder an welchem ein Endeffektorsystem (9) nach einem der Ansprüche 7 bis 8 montiert ist.

10. Robotersystem (1) nach Anspruch 9, umfassend zumindest eine Steuereinheit, wobei die Steuereinheit (20) mit der Sensoreinheit (18) signaltechnisch verbunden ist, wobei die Sensoreinheit (18) dazu eingerichtet ist, bei einem erkannten oder detektierten, insbesondere während einer Bewegung des Roboterarms (7) auftretenden, Kollisionsereignis, ein Kollisionssignal (K) zu erzeugen und der Steuereinheit (20) bereitzustellen, und wobei die Steuereinheit (20) dazu eingerichtet ist, in Reaktion auf den Empfang des Kollisionssignals (K) die Bewegung des Roboterarms (7) zu stoppen und/oder den Roboterarm (7) und den Endeffektor (11) in eine vorgegebene Ausgangslage zu steuern.

11. Robotersystem (1) nach Anspruch 10, wobei die Steuereinheit (20) ferner dazu eingerichtet ist, nach Steuerung des Roboterarms (7) in die vorgegebene Ausgangslage, und ausgehend von der Ausgangslage einen weiteren Bewegungsprozess oder -zyklus des Roboterarms (7) zu steuern.

12. Robotersystem (1) nach einem der Ansprüche 9 bis 11, wobei das Robotersystem (1) eingerichtet ist als ein Bin-Picking-System zur Entnahme eines Objekts, insbesondere eines Werkstücks (3), aus einem Behälter (4).

13. Robotersystem (1) nach einem der Ansprüche 9 bis 12, wobei der Endeffektor (11) eine oder mehrere mechanische, pneumatische und/oder magnetische Handhabungseinheiten, insbesondere Greifer oder Greifeinrichtungen umfasst.

14. System umfassend zumindest ein Robotersystem (1) nach einem der Ansprüche 9 bis 13 und eine oder mehrere Umformmaschinen zur Umformung, insbesondre zum Schmieden oder Pressen, von Werkstücken (3), wobei das zumindest eine Robotersystem (1) eingerichtet ist zur Beschickung zumindest einer der Umformmaschinen mit Werkstücken (3), insbesondere Rohlingen.

15. System nach Anspruch 14, umfassend des Weiteren einen Bereitstellungsbereich für die Werkstücke (3), wobei das Robotersystem (1) dazu eingerichtet ist, mittels des Endeffektors (11) oder Endeffektorsystems (9) Werkstücke im Bereitstellungsbereich aufzunehmen und der Umformmaschine zur Bearbeitung zuzuführen, wobei die Werkstücke (3) im Bereitstellungsbereich, vorzugsweise in einem Behälter oder einer Kiste, insbesondere sortiert oder unsortiert, vorliegen.
